(19) Europäisches Patentamt
European Patent Office
Office européen des brevets

(11) Publication number: 0 095 865 A2

(12) EUROPEAN PATENT APPLICATION

(21) Application number: 83302860.8

(22) Date of filing: 19.05.83

(51) Int. Cl.³: B 29 C 17/03, C 08 J 5/18

(30) Priority: 01.06.82 US 383645

(43) Date of publication of application: 07.12.83 Bulletin 83/49

(84) Designated Contracting States: DE FR GB IT NL

(71) Applicant: CELANESE CORPORATION, 1211 Avenue Of The Americas, New York New York 10036 (US)

(72) Inventor: Ide, Yoshiaki, 178 Sandford Avenue, US-North Plainfield New Jersey (US)
Inventor: Buckley, Alan, 248 Chaucer Drive, Berkeley Heights New Jersey (US)

(74) Representative: Downer, John Michael et al, Imperial Chemical Industries PLC Legal Department: Patents Thames House North Millbank, London SW1P 4QG (GB)

# (54) Thermoformed shaped articles of thermotropic liquid crystal polymers and methods of production thereof.

(57) Thermoformed articles of thermotropic liquid crystal polymers and a method of production thereof are provided. The articles exhibit desirable physical properties including dimensional stability (i.e. the articles exhibit minimal elastic recoil upon being subjected to high temperature conditions) as well as temperature and chemical stability. The articles also exhibit a high degree of polymeric orientation subsequent to the thermoforming operation which can be retained up to the melting temperature of the polymer since the polymer is capable of forming an anisotropic melt phase.

EP 0 095 865 A2

THERMOFORMED SHAPED ARTICLES OF THERMOTROPIC LIQUID CRYSTAL POLYMERS AND METHODS OF PRODUCTION THEREOF

The present invention relates to thermoformed shaped articles comprised of thermotropic liquid crystal polymers.

Thermoformed articles have been employed for many years in a variety of applications. In thermoforming operations, a plastic sheet is stretched in such a manner as to orient the polymer chains in the plane of the sheet but more or less randomly within the plane, thus improving the physical properties of the article. Such articles have typically been comprised of thermoplastic polymers which are not dimensionally stable. That is, subsequent to the thermoforming operation, the article is allowed to cool so that the article retains the shape imparted to it by thermoforming. However, upon again being heated to a temperature which exceeds the glass transition temperature (Tg) of the polymer, the polymer begins to shrink and causes deformation of the article. Such a phenomenon is known as elastic recoil, the extent of which is determined by the degree of shrinkage at elevated temperatures.

All oriented sheets of conventional polymers shrink at a temperature between their glass transition temperatures (Tg) and their melting points. The amount of and temperature at which shrinkage occurs depend on the type of polymer and annealing history of the sheet. For example, amorphous polymers such as polystyrene or polycarbonate exhibit only a thermal expansion until the second order transition or Tg is reached. At temperatures above Tg, the oriented material shrinks, the rate of shrinking increasing with temperature. Crystallisable polymers such as polyethylene terephthalate (PET) on the other hand, can be stabilised against gross shrinkage by crystallising the oriented sheet. For example, at 100°C glassy PET can shrink as much as 50 percent but can be

stabilised to approximately 1 percent of shrinkage by crystallisation. However, crystallisation is never complete so that shrinkage cannot be avoided in an oriented sheet above Tg and even highly stabilised PET exhibits shrinkage of several percent at 150°C. Such conventional thermoformed articles must thus be employed in low temperature environments. It is therefore desirable to provide a thermoformed article and a method of production thereof whereby the article possesses greater dimensional stability than conventional thermoformed articles.

It is also known to those skilled in the art that the heat treatment of shaped articles of liquid crystal polymers increases the melting temperature, molecular weight and mechanical properties of the polymer. See, for example, US Patent Nos. 3 975 487, 4 183 895 and 4 247 514.

It is therefore an object of the present invention to provide a method for producing a thermoformed shaped article which exhibits improved dimensional stability as well as desirable chemical and temperature stability.

It is also an object of the present invention to provide a thermoformed shaped article which exhibits improved dimensional stability as well as desirable chemical and temperature stability.

In accordance with one aspect of the present invention, there is provided a method of providing a thermoformed shaped article which exhibits desirable physical properties including improved dimensional stability comprising:

(a) providing a layer of a thermoplastic material comprised of a polymer which is capable of forming an anisotropic melt phase;

(b) heating said layer of material to a temperature at least equal to the melting temperature of the polymer;

(c) causing said heated layer of material to conform to the shape of a three-dimensional form; and

(d) causing said material to cool below the solidification temperature of said polymer to form a thermoformed shaped article.

In accordance with another aspect of the present invention, there is provided a thermoformed article which exhibits desirable physical properties including improved dimensional stability formed by a method comprised of the following steps:

(a) providing a layer of a thermoplastic material comprised of a polymer which is capable of forming an anisotropic melt phase;

(b) heating said layer of material to a temperature at least equal to the melting temperature of the polymer;

(c) causing said heated layer of material to conform to the shape of a three-dimensional form; and

(d) causing said material to cool below the solidification temperature of said polymer to form a thermoformed shaped article.

It has been found that thermotropic liquid crystal polymers are uniquely suited for use in the production of shaped articles by thermoforming. Articles so produced

are dimensionally stable (i.e. they exhibit minimal elastic recoil) and exhibit a high degree of orientation after the thermoforming operation. As a result of such improved dimensional stability and in view of the inherent chemical and temperature stability of thermotropic liquid crystal polymers, thermoformed shaped articles produced in accordance with the present invention are suitable for use in a wide range of applications including use as moulded covers, shields, reinforcing structures, etc. Such articles can be employed in hostile environments where they may be subjected to high temperatures as well as various solvents or other types of chemicals.

Thermotropic liquid crystal polymers are polymers which are liquid crystalline (i.e. anisotropic) in the melt phase. These polymers have been described by various terms, including "liquid crystalline", "liquid crystal" and "anisotropic". Briefly, the polymers of this class are thought to involve a parallel ordering of the molecular chains. The state wherein the molecules are so ordered is often referred to either as the liquid crystal state or the nematic phase of the liquid crystalline material. These polymers are prepared from monomers which are generally long, flat and fairly rigid along the long axis of the molecule and commonly have chain-extending linkages that are either coaxial or parallel.

Such polymers readily form liquid crystals (i.e. exhibit anisotropic properties) in the melt phase. Such properties may be confirmed by conventional polarized light techniques whereby crossed polarizers are utilized. More specifically, the anisotropic melt phase may be confirmed by the use of a Leitz polarizing microscope at a magnification of 40X with the sample on a Leitz hot stage and under nitrogen atmosphere. The polymer is optically anistropic, i.e. it transmits light when examined between crossed polarizers. Polarized light is transmitted when

the sample is optically anisotropic even in the static state.

Thermotropic liquid crystal polymers include but are not limited to wholly aromatic polyesters, aromatic-aliphatic polyesters, aromatic polyazomethines, aromatic polyester-carbonates and wholly or non-wholly aromatic polyester-amides. The wholly aromatic polymers are considered to be "wholly" aromatic in the sense that each moiety present in the polymer contributes at least one aromatic ring to the polymer backbone and which enables the polymer to exhibit anisotropic properties in the melt phase.

Such moieties may be derived from aromatic diols, aromatic amines, aromatic diacids and aromatic hydroxy acids. Moieties which may be present in the thermotropic liquid crystal polymers (wholly or non-wholly aromatic) suitable for use in the present invention include but are not limited to the following:

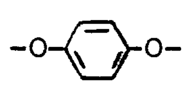 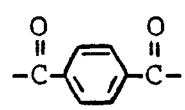 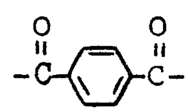

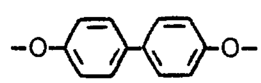 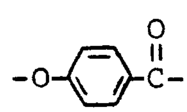

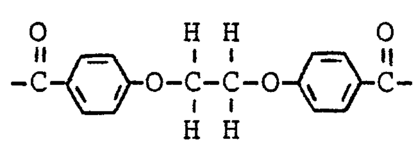 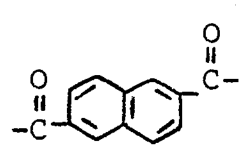

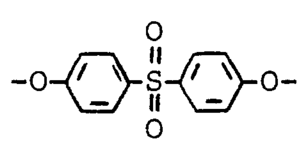 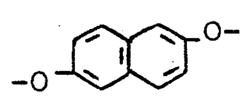

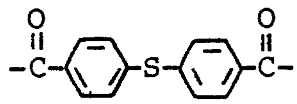

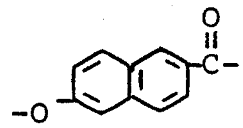

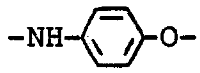

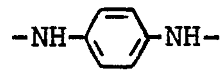

For the purposes of the present invention, the aromatic rings which are included in the polymer backbones of the polymer components may include substitution of at least some of the hydrogen atoms present upon an aromatic ring. Such substituents include alkyl groups of up to four carbon atoms; alkoxy groups having up to four carbon atoms, halogens, and additional aromatic rings, such as phenyl and substituted phenyl. Preferred halogens include fluorine, chlorine and bromine.

Specific examples of suitable aromatic-aliphatic polyesters are copolymers of polyethylene terephthalate and hydroxybenzoic acid as disclosed in <u>Polyester X7G-A Self Reinforced Thermoplastic</u>, by W J Jackson Jr, H F Kuhfuss, and T F Gray Jr, 30th Anniversary Technical Conference, 1975 Reinforced Plastics/Composites Institute, The Society of the Plastics Industry Inc, Section 17-D, pages 1-4. A further disclosure of such copolymers can be found in "Liquid Crystal Polymers": I. Preparation and Properties of p-Hydroxybenzoic Acid Copolymers", <u>Journal of Polymer Science, Polymer Chemistry Edition</u>, Vol. 14, pp 2043-58 (1976), by W J Jackson Jr and H F Kuhfuss. The above-cited references are herein incorporated by reference in their entirety.

Aromatic polyazomethines and processes of preparing the same are disclosed in the US Patent Nos. 3 493 522, 3 493 524, 3 503 739, 3 516 970, 3 516 971, 3 526 611, 4 048 148 and 4 122 070. Each of these patents is herein incorporated by reference in its entirety. Specific

examples of such polymers include poly(nitrilo-2-methyl-1,4-phenylenenitriloethylidyne-1,4-phenyleneethylidyne), poly(nitrilo-2-methyl-1,4-phenylenenitrilomethylidyne-1,4-phenylene-methylidyne) and poly(nitrilo-2-chloro-1,4-phenylenenitrilomethylidyne-1,4-phenylene-methylidyne).

Aromatic polyester-carbonates are disclosed in US Patent Nos. 4 107 143 and 4 284 757 which are herein incorporated by reference in its entirety. Examples of such polymers include those consisting essentially of p-oxybenzoyl units, p-dioxyphenyl units, dioxycarbonyl units, and terephthoyl units.

Aromatic polyester-amides and processes of preparing the same are disclosed in the US Patent No. 4 182 842 and in commonly-assigned US Patent application Serial No. 214 557, filed 9 December 1980. Further disclosure of such copolymers can be found in "Liquid Crystal Polymers: III. Preparation and Properties of Poly(Ester Amides) from p-Aminobenzoic Acid and Poly(Ethylene Terephthalate)", Journal of Applied Polymer Science, Vol. 25, pp. 1685-1694 (1980), by W J Jackson Jr and H F Kuhfuss. The above cited disclosures are herein incorporated by reference in their entirety.

The liquid crystal polymers which are preferred for use in the present invention are the thermotropic wholly aromatic polyesters. Recent publications disclosing such polyesters include (a) Belgian Patent Nos. 828 935 and 828 936, (b) Dutch Patent No. 7505551, (c) West German Patent Nos. 2 520 819, 2 520 820 and 2 722 120, (d) Japanese Patent Nos. 43-223, 2132-116, 3017-692 and 3021-293, (e) US Patent Nos. 3 991 013, 3 991 014, 4 057 597, 4 066 620, 4 075 262, 4 118 372, 4 146 702, 4 153 779, 4 156 070, 4 159 365, 4 169 933, 4 181 792, 4 188 476, 4 201 856, 4 226 970, 4 232 143, 4 232 144, 4 238 600, 4 245 082 and 4 247 514 and (f) UK Application No. 2 002 404.

Wholly aromatic polymers which are preferred for use in the present invention include wholly aromatic polyesters and poly(ester-amide)s which are disclosed in commonly-assigned US Patent Nos. 4 067 852, 4 083 829, 4 130 545, 4 161 470, 4 184 996, 4 219 461, 4 224 433, 4 230 817, 4 238 598, 4 238 599, 4 244 433, 4 256 624, 4 279 803 and 4 299 756, and in commonly-assigned US Application Serial Nos. 91,003, filed 5 November 1979, 214 557, filed 9 December 1980, 251 625 and 251 629 each filed 6 April 1981, 251 818 and 251 819, each filed 7 April 1981, and 270 439, filed 4 June 1981. The disclosures of all of the above-identified commonly-assigned US patents and applications are herein incorporated by reference in their entirety. The wholly aromatic polymers disclosed therein typically are capable of forming an anisotropic melt phase at a temperature below approximately 400°C, and preferably below approximately 350°C.

The polymers such as wholly aromatic polyesters and poly(ester-amide)s which are suitable for use in the present invention may be formed by a variety of ester-forming techniques whereby organic monomer compounds possessing functional groups which, upon condensation, form the requisite recurring moieties are reacted. For instance, the functional groups of the organic monomer compounds may be carboxylic acid groups, hydroxyl groups, ester groups, acyloxy groups, acid halides, amine groups, etc. The organic monomer compounds may be reacted in the absence of a heat exchange fluid via a melt acidolysis procedure. They, accordingly, may be heated initially to form a melt solution of the reactants with the reaction continuing as said polymer particles are suspended therein. A vacuum may be applied to facilitate removal of volatiles formed during the final stage of the condensation (e.g. acetic acid or water).

Commonly-assigned US Patent No. 4 083 829, entitled "Melt Processable Thermotropic Wholly Aromatic Polyester", describes a slurry polymerisation process which may be employed to form the wholly aromatic polyesters which are preferred for use in the present invention. According to such a process, the solid product is suspended in a heat exchange medium. The disclosure of this patent has previously been incorporated herein by reference in its entirety.

When employing either the melt acidolysis procedure or the slurry procedure of US Patent No. 4 083 829, the organic monomer reactants from which the wholly aromatic polyesters are derived may be initially provided in a modified form whereby the usual hydroxy groups of such monomers are esterified (i.e. they are provided as lower acyl esters). The lower acyl groups preferably have from about two to about four carbon atoms. Preferably, the acetate esters of organic monomer reactants are provided.

Representative catalysts which optionally may be employed in either the melt acidolysis procedure or in the slurry procedure of US Patent No. 4 083 829 include dialkyl tin oxide (e.g. dibutyl tin oxide), diaryl tin oxide, titanium dioxide, antimony trioxide, alkoxy titanium silicates, titanium alkoxides, alkali and alkaline earth metal salts of carboxylic acids (e.g. zinc acetate), the gaseous acid catalysts such as Lewis acids (e.g. $BF_3$), hydrogen halides (e.g. HCl), etc. The quantity of catalyst utilized typically is about 0.001 to 1 percent by weight based upon the total monomer weight, and most commonly about 0.01 to 0.2 percent by weight.

The wholly aromatic polymers suitable for use in the present invention tend to be substantially insoluble in common solvents and accordingly are not susceptible to solution processing. As discussed previously, they can be readily processed by common melt processing techniques.

Most suitable wholly aromatic polymers are soluble in pentafluorophenol to a limited degree.

The wholly aromatic polyesters which are preferred for use in the present invention commonly exhibit a weight average molecular weight of about 2000 to 200,000, and preferably about 10,000 to 50,000, and most preferably about 20,000 to 25,000. The wholly aromatic poly(ester-amide)s which are preferred commonly exhibit a molecular weight of about 5000 to 50,000 and preferably about 10,000 to 30,000; e.g. 15,000 to 17,000. Such molecular weight may be determined by gel permeation chromatography as well as by other standard techniques not involving the solutioning of the polymer, e.g. by end group determination via infra-red spectroscopy on compression moulded films. Alternatively, light scattering techniques in a pentafluorophenol solution may be employed to determine the molecular weight.

The wholly aromatic polyesters and poly(ester-amide)s additionally commonly exhibit an inherent viscosity (i.e. IV) of at least approximately 2.0 dl/g, e.g. approximately 2.0 to 10.0 dl/g, when dissolved in a concentration of 0.1 percent by weight of pentafluorophenol at 60°C.

Especially preferred wholly aromatic polyesters and polyester-amides are those which are disclosed in above-noted US Patent Nos. 4 161 470, 4 184 996, 4 219 461, 4 238 599 and 4 256 624 and Application Serial No. 214 557. Preferably, the wholly aromatic polyester comprises not less than about 10 mole percent of recurring units which include a naphthalene moiety such as 6-oxy-2-naphthoyl, 2,6-dioxynaphthalene, and 2,6-dicarboxy-naphthalene.

The thermoformed articles of the present invention may be produced in any conventional manner. Generally, such articles are produced from a sheet of a thermoplastic material which is heated and caused to assume a particular

three-dimensional shape or configuration. The sheet is then caused to cool so that the shape is retained by the material.

More specifically, a thermotropic liquid crystal polymer may be extruded under suitable temperature and pressure conditions through a slit die of appropriate size to form a sheet. It is to be understood that the term "sheet" as used herein includes any of the various relatively thin, substantially flat structures which may be known in the art as sheets, slabs, films, etc. The thickness of such sheets is not critical and will generally depend upon the intended use of the thermoformed article produced therefrom (e.g. greater strength requirements may necessitate the use of sheets of increased thickness). Generally the thickness of the sheet will range from about 5 mils to 1 inch, preferably from about 10 mils to 100 mils.

The particular extrusion apparatus used is not critical and any suitable apparatus may be used herein. Examples of suitable extrusion apparatus are described in <u>Plastics Engineering Handbook of the Society of the Plastics Industry, Inc</u>, Fourth Edition, edited by Joel Frados, Van Nostrand Reinhold Company (1976), pages 156-203.

The conditions of temperature and pressure under which the liquid crystal polymer can be extruded to form the sheets are not critical to the present invention and can easily be determined by one of ordinary skill in the art. Typically, thermotropic liquid crystal polymers can be extruded at a temperature within the range of approximately 250 to 350°C (depending upon the melting temperature of the polymer) and at a pressure within the range of approximately 100 to 5000 psi.

The extruded sheets of the thermotropic liquid crystal polymers typically exhibit a density of about 1.2

to about 1.4 grams/$cm^3$. When lightweight sheets are desired (and ultimately a lightweight thermoformed article), foamed sheets of a density from about 0.3 to 0.7 grams/$cm^3$ can be extruded by incorporation of a blowing agent in a conventional manner.

Various conventional fillers and reinforcing agents may also be employed to enhance various characteristics of the polymer sheet. For example, suitable reinforcing agents such as glass fibres or carbon fibres may be employed to provide reinforcement for the sheet. In addition, other types of additives such as pigments, antioxidants, UV stabilizers, etc may be added to provide a polymer of specific characteristics. The amount of such fillers ranges approximately from 0.2 to 10 percent by weight and preferably ranges from about 0.5 to about 2 percent by weight. The reinforcing agents may be employed in various amounts up to about 50 percent by weight, such as from 10 to 50 percent by weight.

The sheet can then be formed into a thermoformed shaped article by conventional thermoforming methods. The article may be formed into many and varied shapes at an elevated temperature which is at least equal to the melting temperature of the polymer (e.g. between the melting temperature and about 20 centigrade degrees in excess of the melting temperature) and generally with the application of pressure. Exemplary thermoforming methods include mechanical methods such as matched moulds, plugs, etc and pneumatic methods such as vacuum forming, compressed gas-blow moulding, etc. During such methods the heated material is stretched and caused to conform to the shape of a three-dimensional form such as a positive or negative mould. Such methods are well-known in the art and are described, for example, in <u>Plastics Engineering Handbook of the Society of the Plastics Industry, Inc</u>, 4th edition, edited by J Frados, Van Nostrand Reinhold

Company (1976), pages 273-325. After the thermoforming procedure, the article is cooled by suitable means to a temperature below the crystallisation temperature of the polymer (e.g. ambient temperature) to retain the shape of the article.

By way of background, once a polymer is initially heated to a temperature in excess of the melting temperature to convert it to a liquid, the polymer will retain the "liquid" state characteristics as it cools below the melting temperature until it reaches the solidification temperature. Once the polymer cools below the solidification temperature, it once again becomes a "solid" and will retain the thermoformed shape even when pressure is applied.

The solidification temperature for a crystallisable polymer is known as the crystallisation temperature (Tc) and the solidification temperature for non-crystallisable (amorphous) polymers is known as the glass transition temperature (Tg).

The crystallisation temperature will vary for each polymer depending upon the rate of cooling of the polymer. The faster the rate of cooling, the lower the crystallisation temperature. The crystallisation temperature will substantially correspond to the melting temperature if the cooling rate is infinitely slow. The glass transition temperature will also vary from polymer to polymer but is generally substantially unaffected by the thermal processing conditions employed. Typically, the glass transition temperature for thermotropic liquid crystalline polymers ranges from about 100 to 150°C. It should be noted that while crystallisable polymers possess both glass transition and crystallisation temperatures, amorphous polymers possess only glass transition temperatures. The crystallisation and glass transition temperatures for a specific polymer can be determined by

the use of differential scanning calorimetry. Such a method is well-known to those skilled in the art and will not be discussed in detail herein. The thermoformed articles of the present invention improve upon prior art thermoformed articles in that shape stability is substantially retained even above the solidification temperature (e.g. above the melting temperature).

The mechanical properties of thermoformed shaped articles produced in accordance with the present invention can be improved still further by subjecting the article to a heat treatment following formation thereof. The heat treatment improves the properties of the article by increasing the molecular weight of the liquid crystalline polymer and increasing the degree of crystallinity thereof while also increasing the melting point of the polymer.

The thermoformed article may be thermally treated in an inert atmosphere (e.g. nitrogen, carbon dioxide, argon, helium) or alternatively, in a flowing oxygen-containing atmosphere (e.g. air). It is preferable for such heat treatment to occur in an inert atmosphere to avoid any possible oxidative degradation of the polymer. For instance, the article may be brought to a temperature approximately 10 to 30 centigrade degrees below the melting temperature of the liquid crystal polymer, at which temperature the article remains a solid object. It is preferable for the temperature of the heat treatment to be as high as possible without equaling or exceeding the melting temperature of the polymer. It is most preferable to gradually increase the temperature of heat treatment in accordance with the increase of the melting temperature of the polymer during heat treatment.

The duration of the heat treatment will commonly range from a few minutes to a number of days, e.g. from 0.5 to 200 hours, or more. Preferably, the heat treatment is conducted for a time of 1 to 48 hours and typically from about 5 to 30 hours.

Generally, the duration of heat treatment varies depending upon the heat treatment temperature; that is, a shorter treatment time is required as a higher treatment temperature is used. Thus, the duration of the heat treatment can be shortened for higher melting polymers, since higher heat treatment temperatures can be applied without melting the polymer.

Increase in both tensile strength and flexural strength can be achieved as a result of the heat treatment. However, the most notable increase which is observed occurs with respect to impact resistance. In addition, the melting temperature of the liquid crystal polymer can be increased from between about 10 to about 50 centigrade degrees as a result of the heat treatment, and preferably from about 20 to about 50 centigrade degrees, with the amount of increase which is obtained being dependent upon the temperature used in the heat treatment, with higher heat treatment temperatures giving greater increases.

The chemical resistance also increases with heat treatment and the solubility into pentafluorophenol, one of the rare solvents for thermotropic liquid crystal polymers, continuously decreases with increasing heat treatment time and eventually the material does not dissolve even minimally (such as in amounts of 0.1 percent by weight). Accordingly, reference herein to the degree of solvation of preferred thermotropic liquid crystal polymers is intended to refer to said characteristics prior to heat treatment of the polymer.

The invention is additionally illustrated in connection with the following Examples which are to be considered as illustrative of the present invention. It should be understood, however, that the invention is not limited to the specific details of the Examples.

EXAMPLE 1

A thermotropic liquid crystalline polymer comprised of 27 mole percent of a 6-oxy-2-naphthoyl moiety and 73 mole percent of a p-oxy benzoyl moiety having a melting point of 280°C, and an IV of 5.3 is extruded at 300°C into a sheet using a sheet die of dimensions 4 x 1/16 inches using a 3/4 inch Brabender extruder. Portions of the extruded sheet are thermoformed immediately after being extruded into both a corrugated structure and a cup by use of matched moulds.

Corrugation thermoforming is carried out along both the machine (MD) and transverse (TD) directions. Different degrees of stretching during the cup thermoforming operation are obtained by use of cups of varying heights, thus varying the degree of cup penetration into the sheet, with the degree of stretching being characterised by the thickness reduction. Orientation in the side wall of the cup is determined by wide angle X-ray scattering and characterised by the scattering angle (full width at half maximum of the equatorial 110 reflection). DSC analysis of the polymer at the cooling rate of 80°C indicated that the crystallisation temperature of the polymer is 224°C. The respective orientation angle as a function of the thickness of the thermoformed sheet is depicted in Table I below:

TABLE I

Orientation Angle as a Function of Thickness Reduction

| Article | Sheet thickness (mils) | Thickness reduction (-) | Orientation angle (degrees) |
|---|---|---|---|
| Extruded Sheet | 80 | 1 | 95 |
| Cup 1 | 42 | 1.9 | 40 |
| Cup 2 | 20 | 4.0 | 24 |
| Cup 3 | 8 | 10.0 | 18 |

The data in Table I demonstrates that the greater the thickness reduction achieved during the thermoforming operation, the greater is the degree of orientation exhibited by the thermoformed article.

EXAMPLE 2

Certain of the thermoformed articles of Example 1 are placed in a Blue M forced air oven with a window and observed to determine the temperature at which the shape begins to change when heated up to 310°C over a period of time of 30 minutes. A blow moulded bottle comprised of polyethylene terephthalate is also placed in the oven as a comparison. The results of the test are depicted in Table II:

TABLE II

Thermal Stability of Thermoformed Articles

| Article | Shape stability limit |
|---|---|
| Cup | 290°C |
| Corrugated sheet (to MD) | 288°C |
| Corrugated Sheet (to TD) | 304°C |
| Bottle (PET) | 102°C |

Example 2 demonstrates that the thermoformed articles of Example 1 are stable at temperatures in excess of the melting temperature (280°C) of the polymer. By way of contrast, the temperature stability limit of the bottle comprised of polyethylene terephthalate is well below the melting temperature of the polymer.

EXAMPLE 3

In order to determine the degree of retention of orientation of the thermoformed articles of Example 1, highly orientated cups of a wall thickness of 20 mils are placed in an oven and heated to 250°C, 275°C and 290°C.

Starting from a temperature of 26°C, heating times were 20 minutes to 250°C, 23 minutes to 275°C, and 25 minutes to 290°C. After exposure to the above temperatures, the orientation of the wall of the cups is determined and summarised in Table III:

TABLE III

Retention of Orientation at High Temperatures

| Temperature | Orientation angle |
|---|---|
| Control (not exposed) | 24° |
| 250°C | 24° |
| 275°C | 28° |
| 290°C | 43° |

Example 3 demonstrates that the high degree of orientation resulting from the thermoforming operation is retained up to the melting temperature of the polymer (280°C), with the degree of orientation being substantially retained even beyond the melting temperature.

EXAMPLE 4

A thermotropic liquid crystalline polymer comprised of 60 mole percent of a 6-acetoxy-2-naphthoyl moiety, 20 mole percent of a terephthoyl moiety, and 20 mole percent of a p-amino phenol moiety having a melting temperature of 280°C and inherent viscosity of 6.2 is extruded at 300°C in the same manner as Example 1. Corrugated structures are formed by stretching the extruded sheet in both the machine (MD) and transverse (TD) directions. Thermoformed cups are also formed. The thermoformed articles thus produced are placed in a forced air oven and heated as in Example 2, with the temperature at which the articles start changing shape being set forth in Table IV:

TABLE IV

Thermal Stability of Thermoformed Articles

| Article | Shape stability limit |
|---|---|
| Cup | 299°C |
| Corrugated sheet (to MD) | 292°C |
| Corrugated Sheet (to TD) | 301°C |

As previously demonstrated in Example 2, the thermoformed articles are shape stable at temperatures in excess of the melting temperature of the polymer.

EXAMPLE 5

The degree of retention of orientation of the thermoformed cup of Example 4 (wall thickness of 22 mils) is determined in the same manner as Example 3, with the results being summarised in Table V below:

TABLE V

Retention of Orientation at High Temperatures

| Temperature | Orientation angle |
|---|---|
| Control (not exposed) | 16° |
| 250°C | 16° |
| 275°C | 18° |
| 290°C | 38° |

Consistent with Example 3, the thermoformed articles of Example 5 retain the orientation resulting from the thermoforming operation at temperatures up to the melting temperature of the polymer.

The principles, preferred embodiments and modes of operation of the present invention have been described in

the foregoing specification. The invention which is intended to be protected herein, however, is not to be contrued as limited to the particular forms disclosed, since these are to be regarded as illustrative rather than restrictive. Variations and changes may be made by those skilled in the art without departing from the spirit of the invention.

CLAIMS

1. A method of providing a thermoformed shaped article which exhibits desirable mechanical properties including improved dimensional stability as well as desirable thermal and chemical resistance comprising:

(a) providing a layer of a thermoplastic material comprised of a polymer which is capable of forming an anisotropic melt phase;

(b) heating said layer of material to a temperature at least equal to the melting temperature of the polymer;

(c) causing said heated layer of material to conform to the shape of a three-dimensional form; and

(d) causing said material to cool below the solidification temperature of said polymer to form a thermoformed shaped article.

2. A method according to claim 1 wherein said layer is heated to a temperature between the melting temperature of said polymer and about 20 centigrade degrees in excess of said melting temperature.

3. A method according to either of claims 1 or 2 wherein said layer is in the form of a sheet.

4. A method according to any one of the preceding claims wherein said article is heat treated at a temperature below the melting temperature of said polymer for a period of time sufficient to increase the melting temperature of said polymer.

5. A method according to claim 4 wherein said heat treatment temperature ranges from about 10 to about 30 centigrade degrees below the melting temperature of the polymer and said heat treatment occurs in a non-oxidizing atmosphere.

6. A method according to any one of the preceding claims wherein said polymer comprises a wholly aromatic polymer.

7. A method according to any one of the preceding claims wherein said polymer comprises a wholly aromatic polyester which comprises not less than about 10 mole percent of recurring units which include a naphthalene moiety.

8. A thermoformed shaped article which exhibits improved dimensional stability and desirable chemical and solvent resistance formed by a method comprised of the following steps:

(a) providing a layer of a thermoplastic material comprised of a polymer which is capable of forming an anisotropic melt phase;

(b) heating said layer of material to a temperature at least equal to the melting temperature of the polymer;

(c) causing said heated layer of material to conform to the shape of a three-dimensional form; and

(d) causing said material to cool below the solidification temperature of said polymer to form a thermoformed shaped article.

9. An article according to claim 8 wherein said layer is heated to a temperature between the melting temperature of said polymer and about 20 centigrade degrees in excess of said melting temperature.

10. An article according to either of claim 8 or claim 9 wherein said layer is in the form of a sheet.